(19) Europäisches Patentamt / European Patent Office / Office européen des brevets

(11) **EP 4 651 393 A1**

(12) **EUROPEAN PATENT APPLICATION**

(43) Date of publication:
**19.11.2025 Bulletin 2025/47**

(21) Application number: 25175468.5

(22) Date of filing: **09.05.2025**

(51) International Patent Classification (IPC):
*H04B 7/0413* (2017.01)    *H04B 17/391* (2015.01)
*H04W 76/28* (2018.01)    *G06N 3/00* (2023.01)
*G06N 3/0464* (2023.01)    *G06N 3/08* (2023.01)
*H04W 24/08* (2009.01)

(52) Cooperative Patent Classification (CPC):
**H04B 17/3913; G06N 3/00; G06N 3/045;
G06N 3/0464; G06N 3/08; G06N 3/088; G06N 3/09;
G06N 7/01; H04W 24/08; H04W 76/28;**
H04B 7/0413

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.05.2024 FI 20245586**

(71) Applicant: **Nokia Solutions and Networks Oy
02610 Espoo (FI)**

(72) Inventors:
• **BHAGAVATHULA ANANTHA GOPALA, Ravi
Sharan
70734 Fellbach (DE)**
• **MANDELLI, Silvio
71634 Ludwigsburg (DE)**

(74) Representative: **DREISS Patentanwälte PartG
mbB
Friedrichstraße 6
70174 Stuttgart (DE)**

(54) **APPARATUS AND METHOD FOR A NETWORK DEVICE**

(57) An apparatus for a network device, the apparatus comprising at least one processor, and at least one memory storing instructions that, when executed by the at least one processor, cause the network device to: determine an expected radio resource demand, perform, at least based on the expected radio resource demand, at least one of a) a micro discontinuous transmission technique, or b) a multiple input multiple output, MIMO, muting technique, or c) a power-domain decision.

## Fig. 1A

EP 4 651 393 A1

**Description**

**Field of the Disclosure**

The disclosure relates to an apparatus for a network device.
The disclosure further relates to a method for a network device.

**Background**

Communication systems such as, e.g., wireless communication systems may be used for wireless exchange of information between two or more entities, e.g., comprising one or more terminal device, e.g., user equipment (UE), and one or more network devices such as, e.g., base stations.
In some conventional approaches such as, e.g., based on the third-generation partnership project (3GPP), the numbers of antennas at base stations are increasing, e.g., leading to extreme multiple input multiple output (eMIMO) systems. While in some approaches such systems are envisaged to operate with wider bandwidths and very large antenna array sizes, e.g., in comparison to massive MIMO (mMIMO) systems, which may bring improvements in terms of the spectral efficiency (SE) or quality of service (QoS), it may also lead to an increase in a power consumption at the base stations.

**Summary**

Various example embodiments of the disclosure are set out by the independent claims. The example embodiments and features, if any, described in this specification, that do not fall under the scope of the independent claims, are to be interpreted as examples useful for understanding various example embodiments of the disclosure.
Some example embodiments relate to an apparatus for a network device, the apparatus comprising at least one processor, and at least one memory storing instructions that, when executed by the at least one processor, cause the network device to: determine an expected radio resource demand, perform, at least based on the expected radio resource demand, at least one of a) a micro discontinuous transmission technique, or b) a multiple input multiple output, MIMO, e.g., mMIMO, muting technique, or c) a power-domain decision or technique. In some examples this enables to, e.g., jointly, control an operation of at least some techniques and/or aspects that may influence energy efficiency.
In some examples, the network device may adhere to and/or may be based on some accepted (and/or planned) standard, such as, e.g. 3G, 4G, 5G, 6G, or some other wireless communication standard.
In some examples, the network device may be a base station, e.g., a gNB.
In some examples, the expected radio resource demand is an expected radio resource demand for a predetermined time, e.g., a predetermined amount of time resources, e.g., for one, e.g., current, slot.
In some examples, the resources are radio resources, e.g., time and/or frequency resources.
In some examples, the artificial intelligence model is a machine learning model.
In some examples, the micro discontinuous transmission technique may provide decision(s) to switch on or off at least one component, e.g., a power amplifier, of a radio frequency (RF) chain of the gNB, thus, e.g., effecting an energy efficiency. In some examples, the micro discontinuous transmission technique may, e.g., be used to turn off, e.g., a transceiver, e.g., for symbols where nothing is to be sent, e.g., if no data transmission is allocated in a respective time resource, e.g., a current slot.
In some examples, the mMIMO muting technique provides selecting an appropriate subset of antenna elements and/or RF chains to successfully enable a transmission to one or more terminal devices, thus, e.g., effecting an energy efficiency.
In some examples, the power-domain decision or technique may, e.g., comprise a technique of the POLITE-type explained in detail further below.
In some examples, the determining of the expected radio resource demand is performed upon taking a scheduling decision in a time period. In some examples, the time period comprises or is a plurality of slots, e.g., time slots. In some examples, the time period comprises or is a single slot.
In some examples, the determining of the expected radio resource demand comprises using an artificial intelligence model.
In some examples, the instructions, when executed by the at least one processor, cause the network device to: determine a number of terminal devices which are connected to the network device. In some examples, the terminal devices which are connected to the network device are those terminals which are currently in a connected state, e.g., in an RRC_CONNECTED state.
In some examples, the number of connected terminal devices may, e.g., be used as input information for the artificial intelligence model.

In some examples, the instructions, when executed by the at least one processor, cause the network device to perform at least one of: a) providing a convolutional neural network as the artificial intelligence model, or b) training the artificial intelligence model using a supervised learning approach.

In some examples, the instructions, when executed by the at least one processor, cause the network device to: model the micro discontinuous transmission technique by a first Markov decision process, wherein a state variable $s(t)$ of the first Markov decision process is characterized by at least one of: a) the expected radio resource demand, or b) a signal to interference plus noise ratio associated with at least one terminal device, or c) at least one parameter characterizing a quality of service associated with at least one terminal device, wherein a reward function r of the first Markov decision process is based on an achievable fair sum-rate $R_{sum}$ for the at least one terminal device and on an energy consumption $E_{cons}$ associated with the network device.

In some examples, the instructions, when executed by the at least one processor, cause the network device to: model, e.g., jointly model, the micro discontinuous transmission technique and the MIMO muting technique by a second Markov decision process.

In some examples, elements of an action space of the second Markov decision process characterize at least one of: a) information, whether at least one of a plurality of radio frequency chains should be activated, or b) information how many antenna elements and/or radio frequency chains should be used, e.g., for a predetermined time resource, e.g., a slot, or c) information indicating at least one of c1) a predetermined muting pattern for MIMO muting, or c2) a micro discontinuous transmission technique operation.

In some examples, the instructions, when executed by the at least one processor, cause the network device to: determine whether to apply at least one further technique for improving energy efficiency, and, based on the determination, apply the at least one further technique for improving energy efficiency.

In some examples, the at least one further technique for improving energy efficiency comprises at least one of: a) a power domain technique for reducing a transmit power for at least one specific transmission to at least one terminal device, e.g., as disclosed by S. Mandelli, A. Lieto, P. Baracca, A. Weber and T. Wild, "Power Optimization for Low Interference and Throughput Enhancement for 5G and 6G systems," in 2021 IEEE Wireless Communications and Networking Conference Workshops (WCNCW), Nanjing, 2021, or b) a technique for reducing a crest factor, or c) a technique for controlling an effective isotropic radiated power (EIRP).

Some examples relate to an apparatus for a network device, the apparatus comprising means for determining an expected radio resource demand, performing, at least based on the expected radio resource demand, at least one of a) a micro discontinuous transmission technique, or b) a multiple input multiple output, MIMO, muting technique, or c) a power-domain decision.

In some examples, the means for determining the expected radio resource demand using an artificial intelligence model, and for performing, at least based on the expected radio resource demand, at least one of a) the micro discontinuous transmission technique, or b) the multiple input multiple output, MIMO, muting technique may, e.g., comprise at least one processor, and at least one memory storing instructions that, when executed by the at least one processor, cause the apparatus to perform the aforementioned aspects of determining and performing.

In some examples, the means for determining the expected radio resource demand using an artificial intelligence model, and for performing, at least based on the expected radio resource demand, at least one of a) the micro discontinuous transmission technique, or b) the multiple input multiple output, MIMO, muting technique may, e.g., comprise circuitry configured to perform the aforementioned aspects of determining and performing.

Some examples relate to a network device, e.g., base station, e.g., gNB, for a communication system comprising at least one apparatus according to the disclosure.

Some examples relate to a communication system comprising: at least one apparatus according to the disclosure.

Some examples relate to a method for a network device, comprising: determining an expected radio resource demand, performing, at least based on the expected radio resource demand, at least one of a) a micro discontinuous transmission technique, or b) a multiple input multiple output, MIMO, muting technique, or c) a power-domain decision.

Some examples relate to a computer program comprising instructions which, when executed by an apparatus, cause the apparatus to perform the method according to the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

**Brief Description of the Figures**

Fig. 1A    schematically depicts a block diagram according to some examples,

Fig. 1B    schematically depicts a block diagram according to some examples,

Fig. 2     schematically depicts a block diagram according to some examples,

Fig. 3     schematically depicts a flow chart according to some examples,

Fig. 4     schematically depicts a flow chart according to some examples,

Fig. 5     schematically depicts a flow chart according to some examples,

Fig. 6     schematically depicts a flow chart according to some examples,

Fig. 7     schematically depicts a flow chart according to some examples,

Fig. 8     schematically depicts a flow chart according to some examples,

Fig. 9     schematically depicts antenna patterns according to some examples,

Fig. 10    schematically depicts a block diagram according to some examples.

**Description of some Example Embodiments**

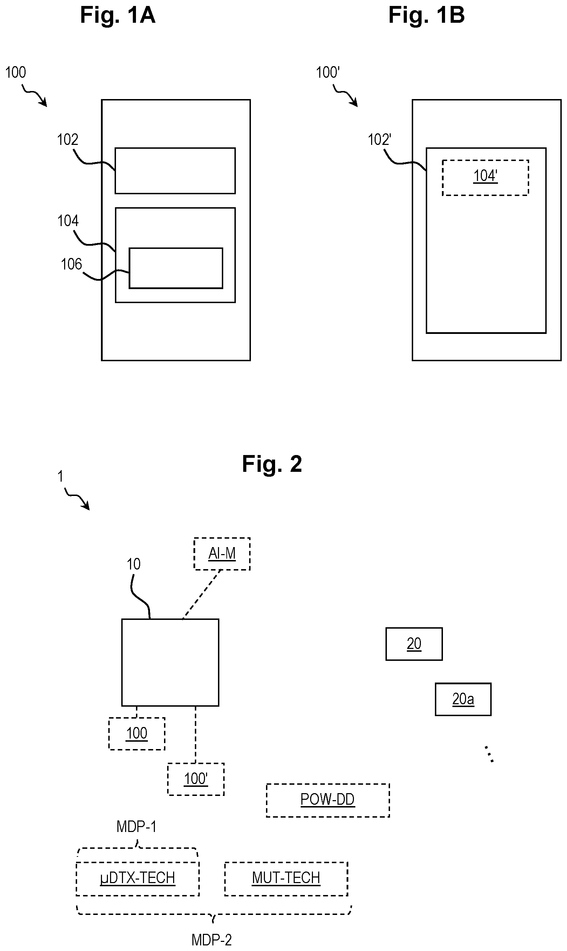

Some example embodiments, see, for example, Fig. 1A, 2, 3, relate to an apparatus 100 for a network device 10, the apparatus 100 comprising at least one processor 102, and at least one memory 104 storing instructions 106 that, when executed by the at least one processor 102, cause the network device 10 to: determine 202 an expected radio resource demand DEM-RR, perform 204, at least based on the expected radio resource demand DEM-RR, at least one of a) a micro discontinuous transmission technique µDTX-TECH, or b) a multiple input multiple output, MIMO, muting technique MUT-TECH, or c) a power-domain decision POW-DD. In some examples this enables to, e.g., jointly, control an operation of at least some techniques and/or aspects that may influence energy efficiency, e.g., of the network device 10.

In some examples, Fig. 2, the network device 10 may adhere to and/or may be based on some accepted (and/or planned) standard, such as, e.g. 3G, 4G, 5G, 6G, or some other wireless communication standard.

In some embodiments, Fig. 2, the network device 10 may be a base station, e.g., a gNB. In some examples, the gNB may be configured to serve one or more terminal devices 20, 20a, ... .

In some examples, the expected radio resource demand DEM-RR is an expected radio resource demand for a predetermined time, e.g., a predetermined amount of time resources, e.g., for one, e.g., current, slot.

In some examples, Fig. 2, the artificial intelligence model AI-M is a machine learning (ML) model.

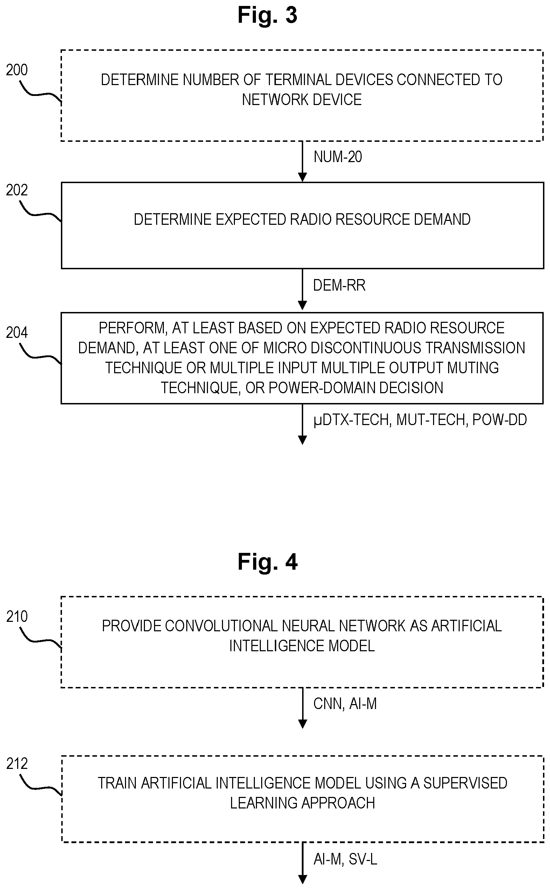

In some examples, Fig. 3, the determining 202 of the expected radio resource demand DEM-RR is performed upon taking a scheduling decision in a time period. In some examples, the time period comprises or is a plurality of slots, e.g., time slots. In some examples, the time period comprises or is a single slot.

In some examples, Fig. 3, the determining 202 of the expected radio resource demand DEM-RR comprises using an artificial intelligence model AI-M.

In some examples, Fig. 3, the instructions 106, when executed by the at least one processor 102, cause the network device 10 to: determine 200 a number NUM-20 of terminal devices 20, 20a, ... which are connected to the network device 10. In some examples, the terminal devices 20, 20a, ... which are connected to the network device 10 are those terminals which are currently in a connected state, e.g., in an RRC _CONNECTED state.

In some examples, Fig. 2, the number NUM-20 of connected terminal devices may, e.g., be used as input information for the artificial intelligence model AI-M.

In some examples, Fig. 4, the instructions 106, when executed by the at least one processor 102, cause the network device 10 to perform at least one of: a) providing 210 a convolutional neural network CNN as the artificial intelligence model AI-M, or b) training 212 the artificial intelligence model AI-M, e.g., the convolutional neural network CNN, using a supervised learning approach SV-L.

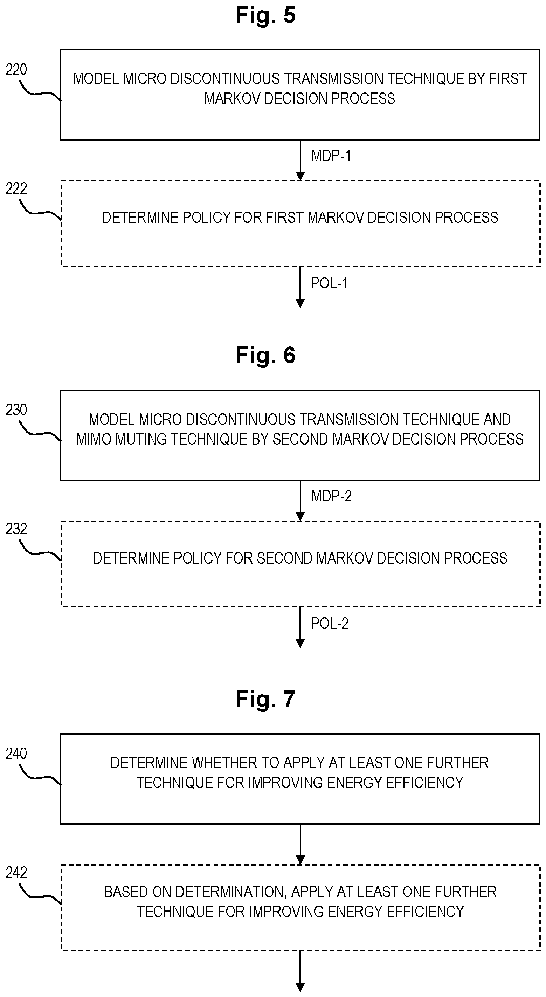

In some examples, Fig. 5, the instructions 106, when executed by the at least one processor 102, cause the network device 10 to: model 220 the micro discontinuous transmission technique µDTX-TECH by a first Markov decision process MDP-1, wherein a state variable $s(t)$ of the first Markov decision process MDP-1 is characterized by at least one of: a) the expected radio resource demand DEM-RR, or b) a signal to interference plus noise ratio, SINR, associated with at least one terminal device, or c) at least one parameter characterizing a quality of service, QoS, associated with at least one terminal device 20, wherein a reward function $r(t)$ of the first Markov decision process MDP-1 is based on an achievable fair sum-rate $R_{sum}$ for the at least one terminal device 20 and on an energy consumption $E_{cons}$ associated with the network device 10.

The optional block 222 of Fig. 5 symbolizes determining a policy POL-1 for the first Markov decision process MDP-1 according to some examples, which are explained in detail further below.

In some examples, Fig. 6, the instructions 106, when executed by the at least one processor 102, cause the network device 10 to: model 230, e.g., jointly model 232, the micro discontinuous transmission technique μDTX-TECH and the MIMO muting technique MUT-TECH by a second Markov decision process MDP-2.

In some examples, Fig. 2, 6, elements of an action space of the second Markov decision process MDP-2 characterize at least one of: a) information, whether at least one of a plurality of radio frequency chains (e.g., of the gNB 10) should be activated, or b) information how many antenna elements and/or radio frequency chains should be used, e.g., for a predetermined time resource, e.g., a slot, or c) information indicating at least one of c1) a predetermined muting pattern for MIMO muting, or c2) a micro discontinuous transmission technique operation.

The optional block 232 of Fig. 6 symbolizes determining a policy POL-2 for the second Markov decision process MDP-2 according to some examples, which are explained in detail further below.

In some examples, Fig. 7, the instructions 106, when executed by the at least one processor 102, cause the network device 10 to: determine 240 whether to apply at least one further technique for improving energy efficiency, e.g., of the network device, and, based on the determination 240, apply 242 the at least one further technique for improving energy efficiency. In other words, in some examples, if the determination 240 yields that the energy efficiency of the gNB may be (further) improved by the at least one further technique for improving the energy efficiency, this at least one further technique is applied according to block 242 of Fig. 7. However, if the determination 240 yields that the energy efficiency of the gNB may not be (further) improved by the at least one further technique for improving the energy efficiency, block 242 may be omitted.

In some examples, Fig. 7, the at least one further technique for improving energy efficiency comprises at least one of: a) a power domain technique for reducing a transmit power for at least one specific transmission to at least one terminal device, e.g., according to the POLITE-type, e.g., as disclosed by S. Mandelli, A. Lieto, P. Baracca, A. Weber and T. Wild, "Power Optimization for Low Interference and Throughput Enhancement for 5G and 6G systems," in 2021 IEEE Wireless Communications and Networking Conference Workshops (WCNCW), Nanjing, 2021, or b) a technique for reducing a crest factor, or c) a technique for controlling an effective isotropic radiated power (EIRP).

Some examples, Fig. 1B, relate to an apparatus 100' for a network device 10, the apparatus 100' comprising means 102' for determining 202 an expected radio resource demand DEM-RR, performing 204, at least based on the expected radio resource demand, at least one of a) a micro discontinuous transmission technique, or b) a multiple input multiple output, MIMO, muting technique, or c) a power-domain decision POW-DD.

In some examples, the power-domain decision POW-DD or technique may, e.g., comprise the above-explained POLITE technique.

In some examples, Fig. 1B, the means 102' for determining 202 the expected radio resource demand using an artificial intelligence model, and for performing 204, at least based on the expected radio resource demand, at least one of a) the micro discontinuous transmission technique, or b) the multiple input multiple output, MIMO, muting technique may, e.g., comprise at least one processor 102 (see, for example, Fig. 1A), and at least one memory 104 storing instructions 106 that, when executed by the at least one processor 102, cause the apparatus 100' to perform the aforementioned aspects of determining 202 and performing 204.

In some examples, Fig. 1B, the means 102' for determining the expected radio resource demand using an artificial intelligence model, and for performing, at least based on the expected radio resource demand, at least one of a) the micro discontinuous transmission technique, or b) the multiple input multiple output, MIMO, muting technique may, e.g., comprise circuitry 104' configured to perform the aforementioned aspects of determining 202 and performing 204.

Some examples, Fig. 2, relate to a network device 10, e.g., base station, e.g., gNB, for a communication system 1 comprising at least one apparatus 100, 100' according to the disclosure.

Some examples, Fig. 2, relate to a communication system 1 comprising: at least one apparatus 100, 100' according to the disclosure.

Some examples, Fig. 3, relate to a method for a network device 10, comprising: determining 202 an expected radio resource demand, performing 204, at least based on the expected radio resource demand, at least one of a) a micro discontinuous transmission technique, or b) a multiple input multiple output, MIMO, muting technique, or c) a power-domain decision.

In the following, further aspects and examples are disclosed, which, in some examples, may be combined with each other and/or with at least one of the aforementioned aspects or examples.

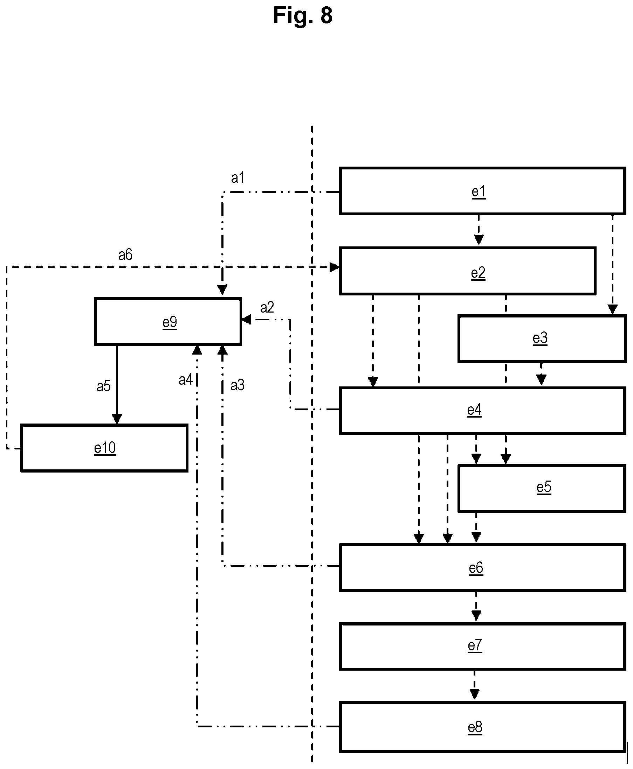

Fig. 8 schematically depicts a flow chart according to some examples.

Element e1 symbolizes determining connected terminal devices, e.g., at least similar to block 200 of Fig. 3. In some examples, in element e1, a list of terminal devices 20, 20a, ... (Fig. 2), which are currently in an RRC _CONNECTED state, is determined.

Element e2 symbolizes determining an expected radio resource demand DEM-RR, e.g., at least similar to block 202 of Fig. 3, e.g., based on the list of terminal devices as, e.g., obtained by element e1 of Fig. 8. In some examples, the expected radio resource demand DEM-RR provides a forecast of an expected resource usage for a current slot based on the AI model AI-M (Fig. 2).

Element e3 of Fig. 8 symbolizes determining a set of terminal devices to be served in, e.g., a current time slot, e.g., based on a conventional technique using at least one of a) QoS, or b) fairness metrics.

Element e4 of Fig. 8 symbolizes performing at least one of the micro discontinuous transmission technique μDTX-TECH and the MIMO muting technique MUT-TECH, e.g., at least similar to block 204 of Fig. 3, e.g., based on the expected radio resource demand DEM-RR as obtained by element e2 and based on the set of terminal devices as determined by element e3. In other words, in some examples, one or more decisions as may, e.g., be obtained by at least one of the micro discontinuous transmission technique μDTX-TECH and the MIMO muting technique MUT-TECH may depend on the expected radio resource demand DEM-RR as provided by element e2.

Element e5 of Fig. 8 symbolizes determining whether an energy efficiency may be further improved, e.g., after performing the aspects of element e4 (e.g., in the form of a joint μDTX + mMIMO muting decision), and, if the determination is positive, the procedure continues with element e6.

In some examples, Fig. 8, the determination of element e5 may be based on checking if one or more necessary conditions for execution of at least one further technique for improving energy efficiency are satisfied. If so, as mentioned above, the procedure continues with element e6, which symbolizes performing the at least one further technique for improving energy efficiency. If not, i.e., if one or more necessary conditions for the execution of at least one further technique for improving energy efficiency are not satisfied, in some examples, the procedure continues with element e7, e.g., omitting element e6.

In some examples, Fig. 8, the at least one further technique for improving energy efficiency comprises at least one of: a) a power domain technique for reducing a transmit power for at least one specific transmission to at least one terminal device, e.g., according to the POLITE-type, as already mentioned above, or b) a technique for reducing a crest factor (e.g., "crest factor reduction", CFR), or c) a technique for controlling an effective isotropic radiated power (EIRP).

Element e7 of Fig. 8 symbolizes allocating resources, e.g., for a specific, e.g., current, time slot. In some examples, one or more further operations, e.g., associated with a first layer (e.g., L1) or a second layer (e.g., L2), such as, e.g., beamforming, may be performed.

Element e8 of Fig. 8 symbolizes a perceived radio resource demand, e.g., as opposed to the expected radio resource demand DEM-RR, as may, in some examples, e.g., be determined based on the AI model AI-M, see, for example, element e2.

Element e9 of Fig. 8 symbolizes an experience buffer, which, in some examples, may be used for training of the AI model AI-M (Fig. 2). In some examples, the experience buffer e9 may at least temporarily store information as may, e.g., be obtained by at least one of the blocks e1, e4, e6, e8, see, for example, the arrows a1, a2, a3, a4 of Fig. 8. In some examples at least a part of this information may be used for training the AI model AI-M.

Element e10 of Fig. 8 symbolizes one or more training procedures, e.g., for training the AI model AI-M, e.g., based on the information as may be stored by the experience buffer e9, see arrow a5.

Arrow a6 of Fig. 8 symbolizes a model update, e.g., an update of the AI model AI-M, e.g., based on the one or more training procedures e10.

In some examples, at least some of the following notations may be used:

Let $\mathcal{U} := \{1, 2, ..., \overline{N}\}$ denote a set of all RRC_CONNECTED terminal devices, e.g., UEs, 20, 20a, ... (Fig. 2) associated with the gNB 10, with $\overline{N} \in \mathbb{Z}^+$ denoting a maximum number of UEs supported by the gNB 10. In some examples, the choice of $\overline{N}$ is gNB specific, which may, e.g., depend on at least one network operation feature.

In some examples, a slot (e.g., time slot) is denoted as $t \in \{1, 2, ...\}$, and a set of UEs resulting from an UE selection operation (see, for example, element e3 of Fig. 8) is denoted as $\widehat{\mathcal{U}}(t) \subseteq \mathcal{U}$, s. t $|\widehat{\mathcal{U}}(t)| := N(t) \leq \overline{N}$. In some examples, $\overline{M} \in \mathbb{Z}^+$ denotes a maximum number of radio frequency (RF) chains at the gNB 10, e.g., predetermined based on the underlying hardware. In some examples, the vector notation, $\Delta(t) \in [0, \Delta_{max}]^{\overline{N} \times 1}, \gamma(t) \in \mathbb{R}^{\overline{N} \times 1}, \chi(t) \in \mathbb{R}_{\geq 0}^{\overline{N} \times 1}$, corresponds to UEs' traffic/buffer information (e.g., indicating a number of bits), SINR estimates and QoS requirements respectively, where, $\Delta_{max} \in \mathbb{R}^+$ denotes a maximum buffer size, which in some examples is a gNB specific hyper-parameter.

In some examples, the expected (e.g., normalized) radio resource demand DEM-RR (see, for example, block 202 of Fig. 3 or an output of element e2 of Fig. 8) is denoted by $\hat{\beta}(t) \in [0,1]$, and a perceived radio resource usage (see element e8, Fig. 8) is denoted as $\beta(t) \in [0,1]$. In some examples, as for the decision parameters, $\mu(t) \in \{0,1\}$, $m(t) \in \mathcal{M} := \{1,2, \ldots, \overline{M}\}$ and $\rho(t) \in [0, \hat{\beta}(t)]^{N(t) \times 1}$ represents a $\mu$DTX (micro discontinuous transmission) decision, mMIMO muting decision and POLITE spreading factor, respectively. In some examples, $\mu$DTX may be characterized by a binary set, where $\mu(t) = 1$ corresponds to no data transmission during slot $t$ and otherwise when $\mu(t) = 0$. In some examples, a mMIMO muting decision may be characterized by a number of RF chains to be activated.

In some examples, the perceived radio resource usage may be characterized by the ratio between resources that would be used if no energy efficient operation (that could, e.g., increase the resource usage) were happening and the total amount of resources available.

In some examples, a decision variable for the POLITE technique may, e.g., be characterized as disclosed by S. Mandelli, A. Lieto, P. Baracca, A. Weber and T. Wild, "Power Optimization for Low Interference and Throughput Enhancement for 5G and 6G systems," in 2021 IEEE Wireless Communications and Networking Conference Workshops (WCNCW), Nanjing, 2021, see, for example, equation 9.

In some examples, the determination of the expected radio resource demand $\hat{\beta}(t)$, also see reference sign DEM-RR of Fig. 2, is performed using the AI model AI-M (Fig. 2).

In some embodiments, the determination, e.g., computation, of $\hat{\beta}(t)$ may be modelled using a deep supervised learning approach, wherein, e.g., a convolutional neural network CNN (or a variant of a convolutional neural network) is trained to estimate the value of the expected radio resource demand $\hat{\beta}(t)$, e.g., using labeled data samples.

In some examples, the convolutional neural network CNN can be trained either purely offline, e.g., applying a training or pretraining, e.g., based on simulation data, or online, e.g., at regular training epochs, e.g., using data samples as may be collected from operations of the gNB, e.g., L2 operations of the gNB, e.g., evolving over time.

In some examples, nonetheless, the training procedure as such may, e.g., be carried out as non-real-time operation.

In the following, example aspects of an online training process according to some examples are explained, since they also encapsulate an offline training process according to some examples.

In some examples, e.g., at every training epoch $\tau$, the training procedure e10 (Fig. 8) aims at minimizing a regularized $l_2$ loss where, training is performed on a set of features and their corresponding labels given by $\mathcal{D} := \{(\boldsymbol{x}_i, \beta_i)\}_{i=1}^{D}$. Here, the $i^{th}$ feature vector is characterized as $x_i := [\Delta_i, \mu_i, m_i, \rho_i]$ and its corresponding label is characterized by the perceived radio resource usage, $\beta_i$ (e.g., as obtained by element e8 of Fig. 8). In some examples, $\boldsymbol{D}$ is a gNB specific parameter denoting a length of data samples used for training. In some examples, assuming $\theta$ denotes the trainable parameters of the architecture of the convolutional neural network CNN, then $\hat{\beta}_i(\theta)$ denotes the expected radio resource demand value parametrized w.r.t $\theta$.

In some examples, a loss function, $l(\tau;\theta)$ can be determined, e.g., computed as:

$$l(\tau; \boldsymbol{\theta}) := \frac{1}{D} \sum_{i=1}^{D} \left|\left| \hat{\beta}_i(\boldsymbol{\theta}) - \beta_i \right|\right|^2 + \lambda \cdot \left|\left| \boldsymbol{\theta} \right|\right|^2,$$

where, $\lambda > 0$ is a regularizing parameter, which is, in some examples, predetermined at the gNB 10 (Fig. 2). In some examples, the above loss function $l(\tau;\theta)$ may be used to optimize the trainable parameters $\theta$, e.g., by backpropagation, e.g. via the stochastic gradient descent algorithm.

Note that in some examples, it can be observed that the feature vector $x_i$ comprises of not, e.g., just, the traffic/buffer information pertaining to UEs in the set $\mathcal{U}$, but may also consider individual decisions of individual energy driver(s) (e.g., operational innovations and component technology advancements associated with aspects of energy efficiency), thereby inducing a novel feedback/information-exchange mechanism in some examples.

In the following, aspects related to the micro discontinuous transmission ($\mu$DTX) technique and the mMIMO muting technique according to some examples are provided. In some examples, joint decisions related to $\mu$DTX and mMIMO muting, e.g., together with other aspects or energy drivers according to the disclosure, are enabled.

In some examples, a $\mu$DTX operation may switch ON or OFF power amplifiers (PAs) of the gNB 10, e.g., for a duration of OFDM symbols pertaining to a data transmission in a downlink direction.

In some examples, the mMIMO muting technique comprises of selecting an appropriate subset of antenna elements and/or RF chains of the gNB 10, e.g., to successfully enable transmission to $\hat{\mathcal{U}}(t)$. In some examples, such an operation is NP-hard in nature, e.g., with exponential computational complexity, e.g., for very large antenna systems at the gNB 10.

In some examples, it can be observed that both the energy drivers $\mu$DTX and mMIMO muting may have a direct impact on an output of at least one power amplifier of the gNB 10, which, in some examples, may be exploited from an operational, e.g., optimization, perspective.

In some examples, AI or ML algorithms with a comparatively low or, e.g., reasonable, complexity may be used, e.g., to jointly determine $\mu$DTX and mMIMO muting decisions, e.g., by maximizing an energy efficiency, e.g., subject to QoS constraints. In some examples, this is different from conventional realizations, e.g., of an L2 packet scheduler, where in some conventional approaches, a spectral efficiency and/or QoS forms the sole focus of an optimization problem.

In some examples, a micro discontinuous transmission technique $\mu$DTX-TECH may be performed, e.g., without mMIMO Muting. In other words, in such examples, a $\mu$DTX operation may be considered as a standalone optimization problem.

In some examples, e.g., to this extent, the $\mu$DTX operation may be casted, e.g., described, as, e.g., modeled by, an infinite-horizon discounted Markov decision process (MDP), see, for example the first Markov decision process MDP-1 of Fig. 5. In some examples, a solution, e.g., online solution, for the first Markov decision process MDP-1 may be provided by using, for example low-complexity, algorithms, e.g., from an approximate dynamic programming (ADP) framework.

In some examples, the first Markov decision process MDP-1, which is associated with the $\mu$DTX operation, may comprise the following components:

State Information (inputs): The state variable is characterized by a tuple which is formally defined as $\boldsymbol{s}(t) := \; < \hat{\beta}(t), \gamma(t), \hat{\chi}(t) >$,

where the vectors $\hat{\gamma}(t)$ and $\hat{\chi}(t)$ denote the SINR and QoS values of the UEs in $\widehat{\mathcal{U}}(t)$. Actions (outputs): Since in some examples, the $\mu$DTX operation consists of ON or OFF decisions, an action space can be modelled as $\mathcal{A} \in \{0,1\}$, and the individual actions at slot $t$, $a(t) = 0$ may, e.g., corresponds to $\mu$DTX OFF and $a(t) = 0$ may, e.g., correspond to $\mu$DTX ON.

Immediate reward function: In some examples, the immediate reward function is modelled after an energy efficiency ("EE"-) metric, which, in some examples, may, e.g., be a function of the state variable $s(t)$ and action $\boldsymbol{a}$ at $\boldsymbol{t}$.

Formally, in some examples, the immediate reward may, e.g., be denoted as $r(t) \in \mathbb{R}^+$ and may, e.g., be defined as follows:

$$r(t) = r\big(\boldsymbol{s}(t), a(t)\big) := \frac{R_{sum}(s(t),a(t))}{E_{cons}(s(t),a(t))},$$

where, $R_{sum}(s(t),a(t))$ is an achievable fair sum-rate for UEs in $\widehat{\mathcal{U}}(t)$, which is given by

$$R_{sum}(\boldsymbol{s}(t), a(t); \epsilon) := \begin{cases} \sum_{\widehat{\mathcal{U}}(t)} r_u^{1-\epsilon}, & \epsilon \neq 1 \\ \sum_{\widehat{\mathcal{U}}(t)} \log_2(r_u), & \epsilon = 1 \end{cases},$$

where, $r_u$ is the achievable rate of a UE $u \in \widehat{\mathcal{U}}(t)$. On the other hand, $E_{cons}(s(t),a(t))$ denotes energy consumption, which, in some examples, is given as follows:

$$E_{cons}(\boldsymbol{s}(t), a(t)) := \begin{cases} P_{rad}\big(\boldsymbol{s}(t)\big), & if \; a(t) = 1, \\ 0, & if \; a(t) = 0. \end{cases}$$

In the above equation, $P_{rad}$ denotes a total radiated power (TRP).

Notice that in some examples, $E_{cons}(\boldsymbol{s}(t),a(t))$ is modelled, e.g., only, as a function of TRP since other terms contributing to energy consumption may, e.g., be considered as fixed terms, e.g., as a consequence of the $\mu$DTX operation.

In some examples, an online policy $\pi(t)$ (e.g., deterministic or stochastic) is determined, e.g., provided, which maps $\boldsymbol{s}(t)$ to $a(t)$, e.g., to maximize the expected discounted return,

$$G(t) := \sum_{k=0}^{\infty} \alpha(k) r(t + k + 1),$$

where, $\alpha(k)$ is the discount factor, which is, e.g., predetermined at the gNB 10. In some examples, it may be resorted to, e.g., low-complexity, numerical online policy iteration algorithms, e.g., as disclosed by W. B. Powell, Approximate Dynamic Programming: Solving the curses of dimensionality, John Wiley & Sons, 2007.

In some examples, a mMIMO muting operation which encapsulates aspects of the $\mu$DTX technique may be performed. In other words, in some examples, the $\mu$DTX decision may be subsumed by the mMIMO muting operation. More specifically, in some examples, the mMIMO muting operation is cast as, e.g., may be modeled by, an infinite-horizon discounted MDP, e.g., the second Markov decision process MDP-2 (see Fig. 6), for which, in some examples, the state information $s(t)$ may, e.g., be considered to be the same as in the previous examples related to the first Markov decision process MDP-1, i.e., $s(t) := < \hat{\beta}(t), \hat{\gamma}(t), \hat{\chi}(t) >$.

In some examples, however, the action space, reward and the policy optimization may be adapted for the second Markov decision process MDP-2, e.g., as compared to the first Markov decision process MDP-1, e.g., to efficiently solve a mMIMO muting operation as described below:

Actions: In some examples, an original action space for a mMIMO muting decision may be defined by a composite action space, $\mathcal{A} := \mathcal{A}_1 \times ... \times \mathcal{A}_{\overline{M}}$, where $\mathcal{A}_j := \{0,1\}, \forall j \in \mathcal{M}$ with $\mathcal{A}_j := \{0,1\}$ being a binary set indicating whether or not the $j^{th}$ RF chain of the gNB 10 should be activated. However, in some examples, since $\mathcal{A}$ is exponential w.r.t $\overline{M}$, it induces NP-hardness.

Thus, alternatively, in some examples, a sub-optimal MDP with a finite action space may be considered and solved, wherein individual actions $a(t)$ correspond to, e.g., determining, e.g., just, a number of antenna elements and/or RF chains at every slot $t$, i.e., $a(t) \in \{0\} \cup \mathcal{M}$. In some examples, the action $a(t) = 0$ corresponds to a $\mu$DTX operation.

In some examples, e.g., for the sub-optimal action space, the immediate reward function, $r(t)$ may be defined as:

$$r\big(s(t), a(t)\big) := \frac{R_{sum}(s(t),a(t))}{E_{cons}(s(t),a(t))},$$

where

$$R_{sum}(s(t), a(t) = m) := \sum_{\hat{\mathcal{U}}(t)} \log_2(1 + f_u(s(t), m)),$$

with $f(.)$ being an achievable SINR, which, in some examples, may be a strictly non-decreasing function in $m$ characterizing a rate of each UE in $\hat{\mathcal{U}}(t)$.

In some examples, the energy consumption in the denominator of the immediate reward function $r(t)$ can be characterized by a predetermined energy consumption model. For instance, in some examples, $E_{cons}(s(t),a(t))$ may be given by the energy consumption model as disclosed by S. Wesemann, J. Du and H. Vishwanathan, "Energy Efficient Extreme MIMO: Design Goals and Directions," arXiv e-print, no. doi:10.48550/arXiv.2301.01119, 2023.

In some examples, the energy consumption, e.g., $E_{cons}(s(t),a(t))$, may be determined, e.g., computed, based on, e.g., as a function of, at least one of: a) the micro discontinuous transmission technique, or b) the multiple input multiple output, MIMO, e.g., mMIMO, muting technique, or c) the power-domain decision or technique, e.g., according to the POLITE approach.

Policy: As in the previous examples, a policy may be devised which maximizes the expected discounted return, $G(t)$, for which it can be resorted to, e.g., low-complexity, numerical online policy iteration algorithms as described in W. B. Powell, Approximate Dynamic Programming: Solving the curses of dimensionality, John Wiley & Sons, 2007.

In some examples, related to antenna pattern selection, once the policy determines the number of antenna elements and/or RF chains, e.g., to enable a successful transmission to $\hat{\mathcal{U}}(t)$, e.g., in L2, a suitable antenna pattern can jointly be obtained with, e.g., a precoding functionality in L1.

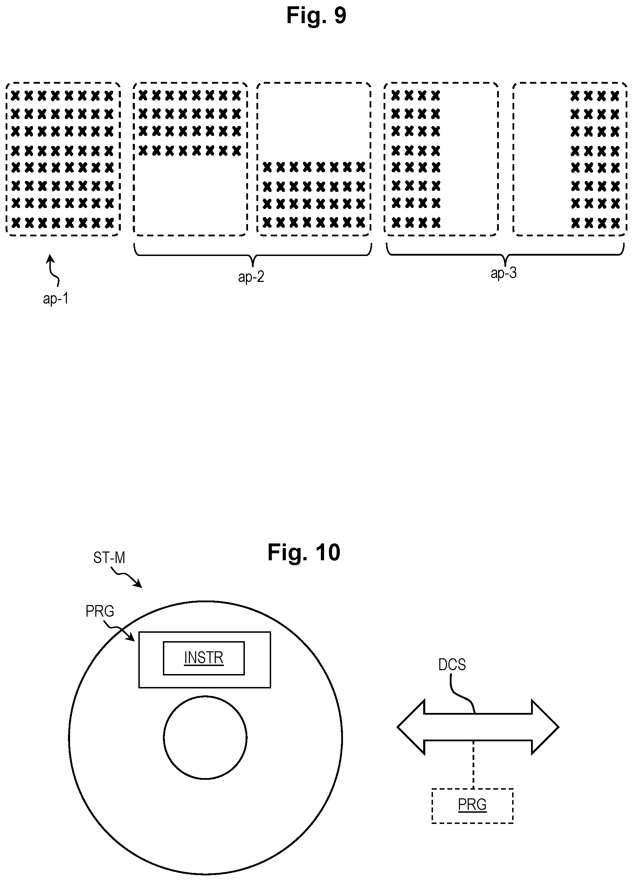

In some examples, a fixed antenna pattern based mMIMO muting is proposed, wherein the state information, the immediate reward function and the policy design may, e.g., be the same as for the preceding examples. However, for the fixed antenna pattern based mMIMO muting, the action space comprises of predetermined antenna muting patterns, see, for example, Fig. 9 which schematically depicts various antenna muting patterns ap-1, ap-2, ap-3 according to some examples, which are explained in detail further below.

Note that, in some examples, predetermined, e.g., fixed, antenna muting patterns may support gNB hardware employing standard-, e.g., 3GPP-, compliant codebook-based precoding at L1. In some examples, an action space for fixed antenna muting patterns is described as follows:

Actions: The set of all muting patterns available at the gNB 10 may collectively be denoted using $\hat{\mathcal{A}}$ such that $\hat{\mathcal{A}} := \{0,1, ... , \tilde{M}\}$, with $\tilde{M}$ denoting the maximum number of patterns, which is different from $\overline{M}$ considered in the preceding examples. In the present examples, each index in the muting pattern set $\hat{\mathcal{A}}$ corresponds to a predetermined muting pattern, with index 0, e.g., denoting $\mu$DTX operation. Three such example patterns are depicted by Fig. 9, where an index "1" corresponds to a full panel operation, see antenna muting pattern ap-1, with each cross representing an antenna element. Similarly, indices "2" and "3" of the muting pattern set $\hat{\mathcal{A}}$ may correspond to, e.g., half panel operation, e.g., in a vertical direction (see pattern ap-2 of Fig. 9) and a horizontal direction (see pattern ap-3 of Fig. 9), e.g., with two muting patterns associated with each index. In some examples, a specific choice of mapping these patterns to their corresponding index can be considered as a predetermined operation at the gNB 10.

In some examples, e.g., once a mMIMO muting operation according to the disclosure is successfully carried out, e.g., for a successful transmission of data (and control information) the gNB 10 may perform further L2 tasks, such as: a) a selection of a modulation and coding scheme, MCS, e.g., for each UE in $\hat{\mathcal{U}}$ (t), and b) transmit power and resource allocation (wherein, in some examples, the resources are allocated in units of one or more physical resource blocks, PRBs) to $\hat{\mathcal{U}}$ (t).

In some examples, e.g., related to element e5 of Fig. 8, it may be checked whether an energy efficient link adaptation mechanism such as, e.g., based on the POLITE-type, as mentioned above, should be performed, e.g., based on the expected radio resource demand DEM-RR as obtained by element e2 of Fig. 8 and on the mMIMO muting as determined by element e4 of Fig. 8.

In some examples, Fig. 8, element e5 may determine, e.g., for a given $\hat{\beta}(t)$ and a mMIMO muting action $m(t)$:

$$\phi(t) := \begin{cases} 1, & if \; R_{sum}\left(\hat{\beta}(t), m(t)\right) > R_{sum}\left(\hat{\beta}(t), m(t), \rho_{thresh}\right) \\ 0, & otherwise. \end{cases}$$

where $\rho_{thresh}$ corresponds to a maximum tolerable MCS degradation, e.g., without pushing the power amplifier(s) of the gNB 10 into an inefficiency region. In some examples, this is because, the MCS obtained w.r.t $\rho_{thresh}$ corresponds to the lowest TRP, at which point the PAs operate in higher backoff, thus leading to reduced efficiency. In some examples, the value $\rho_{thresh}$ may, e.g., depend on factors such as EIRP constraints and power amplifier operation regimes which can be determined via the component technology advancement category energy drivers at the gNB 10.

In some examples, the muting action $m(t)$ may, e.g., be defined in a discrete space. In some examples, the muting action $m(t)$ may, e.g., correspond with at least one muting option as depicted by Fig. 9, e.g., characterizing a number of antenna elements that are active, or any, e.g., specific, embedding, e.g., of the muting pattern.

In some examples, for a POLITE operation, it is proposed: If $\phi(t) = 1$ in the above example, the L2-RT (layer 2 real-time) operations invoke POLITE operation, which, in some examples, may, e.g., use the following tuple of input information denoted by $\Omega(t)$:

$$\Omega(t) := \; < \hat{\beta}(t), m(t), \Delta(t), \chi(t), \overline{\eta}(t), P_{EIRP}(t) >$$

where, $\overline{\eta}(t)$ denotes a vector of aggressive MCS values for the UEs in $\hat{\mathcal{U}}$ (t) determined w.r.t $\gamma(t)$ and $\boldsymbol{P_{EIRP}(T)}$ denotes the EIRP constraint pertaining to angular directions being monitored. In some examples, an algorithmic implementation of the POLITE operation as, e.g., disclosed by WO 2022/028702 A1, may be used.

Note that in some examples, similar approaches to the POLITE technique, which may generally, e.g., be defined as "power-domain techniques", may also be applied in element e5, e.g., instead of the POLITE technique. In some examples, the general idea for element e5 is that a technique performed according to element e5 may reduce the transmit power needed for a specific transmission to a UE, e.g., like the POLITE technique does.

In some examples, Fig. 2, the gNB 10 may also carry out advanced Crest Factor Reduction (CFR) based transmission, e.g., for PAPR (peak to average power ratio) reduction, thus, e.g., further improving an energy efficiency at the gNB 10, since the power amplifier(s) of the gNB 10 may operate at a power closer to their nominal power, with higher resulting energy efficiency. In some examples, e.g., since some techniques for PAPR, such as, e.g., J. Tellado and C. J.M, "Peak power reduction for multicarrier transmission," in IEEE GLOBECOM, 1998, may demand for, e.g., specific carriers to be allocated to transmit special symbols for the purpose of reducing PAPR (also refer to the aspect of "tone reservation"), this resource usage may be properly deduced from the available resources to perform data allocation and transmission. In some examples, e.g., once the resources (and, optionally, the power limit) are known for the UEs in $\hat{\mathcal{U}}$ (t), CFR symbols can be computed using prior art techniques.

In some examples, which relate to EIRP control, an EIRP operational threshold for a slot "t" can, e.g., be determined, e.g., computed, according to, e.g., based on, at least one of: a) an expected (e.g., pessimistic, thus upper-bounded) CRF symbols power consumption on angular directions to be monitored, or b) UEs' precoding and power reduction. In some examples, based on this, the number of resources to be allocated in a data channel to each UE can be reduced, e.g., to comply with the EIRP limit in the current slot for the desired angular direction.

Some examples, Fig. 10, relate to a computer program PRG comprising instructions INSTR which, when executed by an apparatus 100, 100', cause the apparatus 100, 100' to perform the method according to the disclosure.

Some examples, Fig. 10, relate to a computer-readable storage medium ST-M, for example a non-transitory computer-readable storage medium ST-M, comprising the computer program PRG according to the disclosure.

Some examples, Fig. 10, relate to a data carrier signal DCS carrying and/or characterizing the computer program PRG according to the disclosure.

The principle of the disclosure enables to provide an architecture with a holistic view of energy drivers residing in a gNB 10, which manages their operations, e.g., to ensure minimum energy consumption while, e.g., primarily satisfying target QoS requirements. Additionally, the architecture enabled by the principle of the disclosure is easily implementable and real-time executable, e.g., in the gNB 10, e.g., without impacting other, e.g., regular L2 mechanisms.

The principle of the disclosure facilitates interaction among various energy driver operations associated with the gNB 10 (e.g., $\mu$DTX, mMIMO muting and POLITE), being also forward compatible with other features, like CFR and EIRP control. In some examples, this allows to control L2 packet scheduler operations to maximize the overall energy efficiency, e.g., while also controlling the QoS.

## Claims

1. An apparatus (100) for a network device (10), the apparatus (100) comprising at least one processor (102), and at least one memory (104) storing instructions (106) that, when executed by the at least one processor (102), cause the network device (10) to: determine (202) an expected radio resource demand (DEM-RR), perform (204), at least based on the expected radio resource demand (DEM-RR), at least one of a) a micro discontinuous transmission technique ($\mu$DTX-TECH), or b) a multiple input multiple output, MIMO, muting technique (MUT-TECH), or c) a power-domain decision.

2. The apparatus (100) according to claim 1, wherein the determining (202) is performed upon taking a scheduling decision in a time period.

3. The apparatus (100) according to any of the preceding claims, wherein the determining (202) comprises using an artificial intelligence model (AI-M).

4. The apparatus (100) according to claim 3, wherein the instructions (106), when executed by the at least one processor (102), cause the network device (10) to perform at least one of: a) providing (210) a convolutional neural network (CNN) as the artificial intelligence model (AI-M), or b) training (212) the artificial intelligence model (AI-M) using a supervised learning approach (SV-L).

5. The apparatus (100) according to any of the preceding claims, wherein the instructions (106), when executed by the at least one processor (102), cause the network device (10) to: model (220) the micro discontinuous transmission technique ($\mu$DTX-TECH) by a first Markov decision process (MDP-1), wherein a state variable $s(t)$ of the first Markov decision process (MDP-1) is **characterized by** at least one of: a) the expected radio resource demand (DEM-RR), or b) a signal to interference plus noise ratio associated with at least one terminal device (20, 20a, ...), or c) at least one parameter characterizing a quality of service associated with at least one terminal device (20, 20a, ...), wherein a reward function $r(t)$ of the first Markov decision process (MDP-1) is based on an achievable fair sum-rate $R_{sum}$ for the at least one terminal device (20, 20a, ...) and on an energy consumption $E_{cons}$ associated with the network device (10).

6. The apparatus (100) according to any of the preceding claims, wherein the instructions (106), when executed by the at least one processor (102), cause the network device (10) to: model (230) the micro discontinuous transmission technique ($\mu$DTX-TECH) and the MIMO muting technique (MUT-TECH) by a second Markov decision process (MDP-2), wherein elements of an action space of the second Markov decision process (MDP-2) characterize at least one of: a) information, whether at least one of a plurality of radio frequency chains should be activated, or b) information how many antenna elements and/or radio frequency chains should be used, or c) information indicating at least one of c1) a predetermined muting pattern for MIMO muting, or c2) a micro discontinuous transmission technique operation.

7. The apparatus (100) according to any of the preceding claims, wherein the instructions (106), when executed by the at least one processor (102), cause the network device (10) to: determine (240) whether to apply at least one further technique for improving energy efficiency, and, based on the determination (240), apply (242) the at least one further technique for improving energy efficiency.

8. The apparatus (100) according to claim 7, wherein the at least one further technique for improving energy efficiency comprises at least one of: a) a power domain technique for reducing a transmit power for at least one specific transmission to at least one terminal device (20, 20a, ...), or b) a technique for reducing a crest factor, or c) a technique for controlling an effective isotropic radiated power.

9. An apparatus (100') for a network device (10), the apparatus (100') comprising means (102') for determining (202) an expected radio resource demand (DEM-RR), performing (204), at least based on the expected radio resource demand (DEM-RR), at least one of a) a micro discontinuous transmission technique ($\mu$DTX-TECH), or b) a multiple input multiple output, MIMO, muting technique (MUT-TECH), or c) a power-domain decision.

10. A network device (10) for a communication system (1) comprising at least one apparatus (100; 100') according to any of the preceding claims.

11. A communication system (1) comprising: at least one apparatus (100; 100') according to any of the claims 1 to 9.

12. A method for a network device (10), comprising: determining (202) an expected radio resource demand (DEM-RR), performing (204), at least based on the expected radio resource demand (DEM-RR), at least one of a) a micro discontinuous transmission technique ($\mu$DTX-TECH), or b) a multiple input multiple output, MIMO, muting technique (MUT-TECH), or c) a power-domain decision.

13. A computer program (PRG) comprising instructions (INSTR) which, when executed by an apparatus (100; 100'), cause the apparatus (100; 100') to perform the method according to claim 12.

14. A computer-readable storage medium (ST-M), for example a non-transitory computer-readable storage medium, comprising the computer program (PRG) according to claim 13.

15. A data carrier signal (DCS) carrying and/or characterizing the computer program according to claim 13.

**Fig. 1A**

100

102

104

106

**Fig. 1B**

100'

102'

104'

**Fig. 2**

1

10

AI-M

20

20a

100

20a

100'

POW-DD

MDP-1

µDTX-TECH

MUT-TECH

MDP-2

# Fig. 3

200 — DETERMINE NUMBER OF TERMINAL DEVICES CONNECTED TO NETWORK DEVICE

↓ NUM-20

202 — DETERMINE EXPECTED RADIO RESOURCE DEMAND

↓ DEM-RR

204 — PERFORM, AT LEAST BASED ON EXPECTED RADIO RESOURCE DEMAND, AT LEAST ONE OF MICRO DISCONTINUOUS TRANSMISSION TECHNIQUE OR MULTIPLE INPUT MULTIPLE OUTPUT MUTING TECHNIQUE, OR POWER-DOMAIN DECISION

↓ μDTX-TECH, MUT-TECH, POW-DD

# Fig. 4

210 — PROVIDE CONVOLUTIONAL NEURAL NETWORK AS ARTIFICIAL INTELLIGENCE MODEL

↓ CNN, AI-M

212 — TRAIN ARTIFICIAL INTELLIGENCE MODEL USING A SUPERVISED LEARNING APPROACH

↓ AI-M, SV-L

# Fig. 5

220 → MODEL MICRO DISCONTINUOUS TRANSMISSION TECHNIQUE BY FIRST MARKOV DECISION PROCESS

↓ MDP-1

222 → DETERMINE POLICY FOR FIRST MARKOV DECISION PROCESS

↓ POL-1

# Fig. 6

230 → MODEL MICRO DISCONTINUOUS TRANSMISSION TECHNIQUE AND MIMO MUTING TECHNIQUE BY SECOND MARKOV DECISION PROCESS

↓ MDP-2

232 → DETERMINE POLICY FOR SECOND MARKOV DECISION PROCESS

↓ POL-2

# Fig. 7

240 → DETERMINE WHETHER TO APPLY AT LEAST ONE FURTHER TECHNIQUE FOR IMPROVING ENERGY EFFICIENCY

↓

242 → BASED ON DETERMINATION, APPLY AT LEAST ONE FURTHER TECHNIQUE FOR IMPROVING ENERGY EFFICIENCY

↓

# Fig. 8

**Fig. 9**

ap-1

ap-2

ap-3

**Fig. 10**

ST-M

PRG

INSTR

DCS

PRG

Europäisches
Patentamt

European
Patent Office

Office européen
des brevets

**EUROPEAN SEARCH REPORT**

**Application Number**

**EP 25 17 5468**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STEFAN WESEMANN ET AL: "Energy Efficient Design of Extreme MIMO", ARXIV.ORG, CORNELL UNIVERSITY LIBRARY, 201 OLIN LIBRARY CORNELL UNIVERSITY ITHACA, NY 14853, 3 January 2023 (2023-01-03), XP091543950, | 1,7-15 | INV. H04B7/0413 H04B17/391 H04W76/28 G06N3/00 G06N3/0464 |
| Y | * paragraph [000I] - paragraph [0III] * | 2-4 | G06N3/08 |
| A | | 5,6 | H04W24/08 |
| | ----- | | |
| Y | LOPEZ-PEREZ DAVID ET AL: "A Survey on 5G Radio Access Network Energy Efficiency: Massive MIMO, Lean Carrier Design, Sleep Modes, and Machine Learning", IEEE COMMUNICATIONS SURVEYS & TUTORIALS, IEEE, vol. 24, no. 1, 12 January 2022 (2022-01-12), pages 653-697, XP011901318, DOI: 10.1109/COMST.2022.3142532 [retrieved on 2022-02-23] * paragraph [00II] * * paragraph [VIII] - paragraph [000X] * | 2-4 | |
| | ----- | | TECHNICAL FIELDS SEARCHED (IPC) |
| Y | STEFAN WESEMANN ET AL: "Energy Efficient Design of Extreme Massive MIMO", ARXIV.ORG, CORNELL UNIVERSITY LIBRARY, 201 OLIN LIBRARY CORNELL UNIVERSITY ITHACA, NY 14853, 3 January 2023 (2023-01-03), XP091407034, * paragraph [000I] - paragraph [0III] * | 3 | H04B H04W G06N |
| | ----- | | |
| | -/-- | | |

The present search report has been drawn up for all claims

| Place of search | Date of completion of the search | Examiner |
|---|---|---|
| The Hague | 10 October 2025 | Tsapelis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 17 5468

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LAZAROSALEXIOS ILIADIS ET AL: "The road to 6G: a comprehensive survey of deep learning applications in cell-free massive MIMO communications systems", EURASIP JOURNAL ON WIRELESS COMMUNICATIONS AND NETWORKING, BIOMED CENTRAL LTD, LONDON, UK, vol. 2022, no. 1, 9 August 2022 (2022-08-09), pages 1-16, XP021306443, DOI: 10.1186/S13638-022-02153-Z * paragraph [0002] * * paragraph [0004] * ----- | 4 | |
| | | | TECHNICAL FIELDS SEARCHED (IPC) |

The present search report has been drawn up for all claims

| Place of search | Date of completion of the search | Examiner |
|---|---|---|
| The Hague | 10 October 2025 | Tsapelis, Athanasios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................
& : member of the same patent family, corresponding
   document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022028702 A1

**Non-patent literature cited in the description**

- **S. MANDELLI ; A. LIETO ; P. BARACCA ; A. WEBER ; T. WILD**. Power Optimization for Low Interference and Throughput Enhancement for 5G and 6G systems. *2021 IEEE Wireless Communications and Networking Conference Workshops (WCNCW), Nanjing*, 2021
- **W. B. POWELL**. Approximate Dynamic Programming: Solving the curses of dimensionality. John Wiley & Sons, 2007
- **S. WESEMANN ; J. DU ; H. VISHWANATHAN**. Energy Efficient Extreme MIMO: Design Goals and Directions. *arXiv e-print*, 2023
- **J. TELLADO ; C. J.M**. Peak power reduction for multicarrier transmission. *IEEE GLOBECOM*, 1998